# EUROPEAN PATENT SPECIFICATION

(11) **EP 3 689 724 B1**
(45) Date of publication and mention of the grant of the patent: **07.06.2023**
(21) Application number: 18860600.8
(22) Date of filing: 19.09.2018
(51) Int. Cl.: B62J 9/00, B62K 11/04, B62J 43/16, B62K 11/10, B62J 11/00, B60K 6/40, B60K 1/04, B62J 9/14

(54) **HYBRID VEHICLE**
HYBRIDFAHRZEUG
VÉHICULE HYBRIDE

(30) Priority: 29.09.2017 JP 2017192038
(43) Date of publication of application: 05.08.2020
(73) Proprietor: Honda Motor Co., Ltd., Tokyo 107-8556 (JP)
(72) Inventor: NAGAYAMA Masashi, Wako-shi Saitama 351-0193 (JP); DOI Takashi, Wako-shi Saitama 351-0193 (JP)
(74) Representative: Feller, Frank
(86) International application number: PCT/JP2018/034564
(87) International publication number: WO 2019/065390

(56) References cited:
- EP-A2- 1 738 947
- JP-A- 2001 119 801
- JP-A- 2007 250 472
- JP-A- 2012 025 198
- JP-A- 2014 198 541
- US-A1- 2012 175 906
- US-A1- 2017 210 242

## Description

### Technical Field

The present invention relates to a two-wheeled hybrid vehicle having an engine and a battery, and which is configured to drive a motor by electrical power from the battery.

### Background Art

Japanese Laid-Open Patent Publication No. 2005-231424 addresses a problem in which, in a hybrid vehicle, a wide footboard can be assured, and in which operability can be improved by lowering the center of gravity and thereby facilitating load sharing between the front and rear wheels.

In order to solve the aforementioned problem, in the hybrid vehicle disclosed in Japanese Laid-Open Patent Publication No. 2005-231424, in particular, the footboard of a main body portion thereof includes an engine, a generator, a battery, a hybrid control unit, a motor control unit, and a drive motor. Among these components, the engine is disposed at a front end of the footboard. Further, a fuel tank is disposed along a front fork above the engine.

US patent publication no. US 2012/0175906 A1 discloses a two-wheeled vehicle comprising a front wheel, a rear wheel, an engine, a power storage device, a seat, and an accommodating unit formed below the seat; wherein the power storage device is disposed upwardly of the rear wheel so as to at least partially overlap with an upper open region of the accommodating unit as viewed from above, the power storage device comprising: a power storage device main body constituted by stacking a plurality of power storage cells; a case configured to cover the power storage device main body; and a power storage device arrangement body configured to arrange the case in a region where the power storage device is disposed, in a state in which at least a portion of the case is covered; wherein the power storage device arrangement body is fixed to a vehicle body via a vehicle body mounting stay, the two-wheeled vehicle further comprising: seat frames; and a cross frame configured to connect rear portions of the seat frames, wherein a connection site between the power storage device arrangement body and a vehicle body mounting bracket, and a position of the cross frame overlap as viewed from above, the power storage device is disposed forwardly of the vehicle body mounting bracket and the motor is provided further forward in the vehicle longitudinal direction than the terminal.

Another US patent publication no. US 2017/0210242 A1 discloses a battery electric vehicle having an electric generator and an electric motor connected to different wheels of the vehicle. More specifically, the electric generator is connected to the front wheels and the electric motor is connected to the rear wheels. An electricity management device of the vehicle includes multiple battery packs for providing electricity to the electric motors.

European patent publication no. EP 1 738 947 A2 discloses a hybrid vehicle having an engine, a generator for generating electric power using the power of the engine, a battery for storing electric power generated by the generator, and a motor for generating power using electric power from the generator or the battery.

### Summary of Invention

As discussed above, according to Japanese Laid-Open Patent Publication No. 2005-231424, a hybrid vehicle is provided having an engine and a battery, and which is configured to drive a motor by electrical power from the battery. In such a hybrid vehicle, a high-voltage battery for driving the motor is required in addition to the low-voltage battery that is installed in a normal vehicle.

Concerning such a high-voltage battery, the battery is connected to high-voltage wiring, and protection of a high-voltage system including protection of the wiring is an essential consideration in the design of the hybrid vehicle. Further, even in the case that such a high-voltage battery is included, a configuration is desired in which user convenience, such as ensuring the capacity (volume) of an accommodating unit in which a helmet or the like is accommodated, is not impaired.

The present invention has been devised in order to solve the aforementioned problems, and has the object of providing a two-wheeled hybrid vehicle which enables a configuration to be provided in which, while a high-voltage battery is reliably protected, user convenience such as the capacity of an accommodating unit or the like is not impaired.

To achieve this object, the present invention provides a two wheeled hybrid vehicle in accordance with the subject matter of independent claim 1.

More specifically, the present invention provides a two-wheeled hybrid vehicle comprising a front wheel, a rear wheel, an engine, a power storage device, a motor configured to be driven by electrical power from the power storage device, a seat, and an accommodating unit formed below the seat, wherein the power storage device is disposed upwardly of the rear wheel so as to at least partially overlap with an upper open region of the accommodating unit as viewed from above.

The power storage device comprises a power storage device main body constituted by stacking a plurality of power storage cells, a case configured to cover the power storage device main body, and a power storage device arrangement body configured to arrange the case in a region where the power storage device is disposed, in a state in which at least a portion of the case is covered, wherein the power storage device arrangement body is fixed to a vehicle body via a vehicle body mounting stay.

The two-wheeled hybrid vehicle further comprises seat frames, and a cross frame configured to connect rear portions of the seat frames, wherein a connection site between the power storage device arrangement body and a vehicle body mounting bracket, and a position of the cross frame overlap as viewed from above.

The two-wheeled hybrid vehicle further comprises a power cable connected to the power storage device, wherein the power cable is connected to a front side of the power storage device in the vehicle longitudinal direction.

The case includes a terminal to which the power cable is connected, wherein the terminal is provided on a front side of the case in the vehicle longitudinal direction.

The motor is provided further forward in the vehicle longitudinal direction than the terminal.

According to the invention, the upper portion of the power storage device can be covered by the upper portion of the accommodating unit, and it is possible to prevent the vehicle occupant from accessing the power storage device. More specifically, a configuration can be provided in which, while the high-voltage battery is reliably protected, user convenience such as the capacity of the accommodating unit or the like is not impaired.

Further, since the power storage device is arranged below the opening of the accommodating unit, the shape of the seat can be designed without any concern given to the presence or absence of the high-voltage battery. Owing to this feature, components can be used in common between a vehicle having a high-voltage battery and a vehicle that does not have a high-voltage battery, thereby improving productivity.

Furthermore, because the high-voltage battery is arranged at a high position, it is possible to prevent water from entering therein when the vehicle is submerged.

According to the invention, the power storage device arrangement body arranges the case in the region where the power storage device is disposed, in a state in which at least a portion of the case is covered. As a result, objects can be prevented from hitting against the power storage device from the exterior, and damage to the power storage device can be prevented.

According to the invention, the cross frame is positioned at the rear portion of the seat frame. By the connection site between the power storage device arrangement body and the vehicle body mounting bracket being made to overlap with the cross frame as viewed from above, the power storage device can be placed as near as possible to the rear side of the vehicle body. As a result, for example, the capacity of the accommodating unit that is installed under the seat can be assured, and the convenience of the vehicle occupant is not impaired.

Further, since the high-voltage cable is disposed at a position where it is difficult to be accessed from the exterior, damage thereto can be prevented.

Further, the invention has the following additional aspects:
In a first aspect, the vehicle body mounting stay is capable of being fastened from a rear side of the vehicle through a mounting hole that penetrates in a longitudinal direction of the vehicle.

Further, according to the first aspect, since the power storage device is disposed upwardly of the rear wheel, and more rearward than a deepest portion of the accommodating unit so as to at least partially overlap with the upper open region of the accommodating unit as viewed from above, the ease of assembly can be improved.

In a second aspect, the power storage device arrangement body includes the power storage device main body and the case is fixed so as to be inclined in a vehicle longitudinal direction, and a drainage hole is formed in the vicinity of a lowermost inclined portion of the power storage device arrangement body.

According to the second aspect, it is possible to prevent the power storage device main body and the case (battery unit) from becoming submerged.

In a third aspect of the invention, the power storage device is disposed upwardly of the rear wheel, and more rearward than a deepest portion of the accommodating unit so as to at least partially overlap with the upper open region of the accommodating unit as viewed from above.

According to the third aspect, because the high-voltage battery is arranged at a high position, it is possible to prevent water from entering therein when the vehicle is submerged.

In a fourth aspect, the two-wheeled hybrid vehicle may further comprise seat frames, a front cross frame connected between the seat frames, a rear cross frame connected between the seat frames, and a vehicle body mounting bracket configured to mount the power storage device on the front cross frame. A front portion of the power storage device may be fixed directly to the front cross frame via the vehicle body mounting bracket, and a rear portion thereof may be mounted on the vehicle body by way of bolt fastening via the vehicle body mounting stay.

According to the fourth aspect, since the rear portion of the power storage device is fastened by bolts, the power storage device can be configured in a swingable manner, the high-voltage wiring can be made to bend at the same time, and the high-voltage system can be reliably protected.

### Brief Description of Drawings

FIG. 1 is a side view showing an example of a two-wheeled hybrid vehicle according to a present embodiment;
FIG. 2 is a side view showing a structure of a vehicle body frame of the two-wheeled hybrid vehicle;
FIG. 3 is a perspective view showing the structure of the vehicle body frame;
FIG. 4 is a front view showing the structure of the vehicle body frame;
FIG. 5 is a plan view showing an example of an accommodating unit as viewed from above;
FIG. 6 is a plan view showing an example of a power storage device that is installed in the accommodating unit as viewed from above;
FIG. 7 is a perspective view showing a power storage device arrangement body that is fixed to front brackets and rear brackets;
FIG. 8A is a perspective view illustrating an example of a vehicle body mounting stay;
FIG. 8B is a side view showing a structure by which the vehicle body mounting stay is attached to a rear portion of an upper seat frame;
FIG. 9 is a view showing the vehicle body mounting stay and a front cross frame as viewed from a rear side of the vehicle;
FIG. 10 is a plan view showing the power storage device and a tray that is fixed to a front cross frame and a rear cross frame as viewed from above;
FIG. 11 is a vertical cross-sectional view of the power storage device and the tray that is fixed to the front cross frame and the rear cross frame;
FIG. 12 is a plan view showing the power storage device arrangement body as viewed from above; and
FIG. 13 is a perspective view showing the tray.

### Description of Embodiments

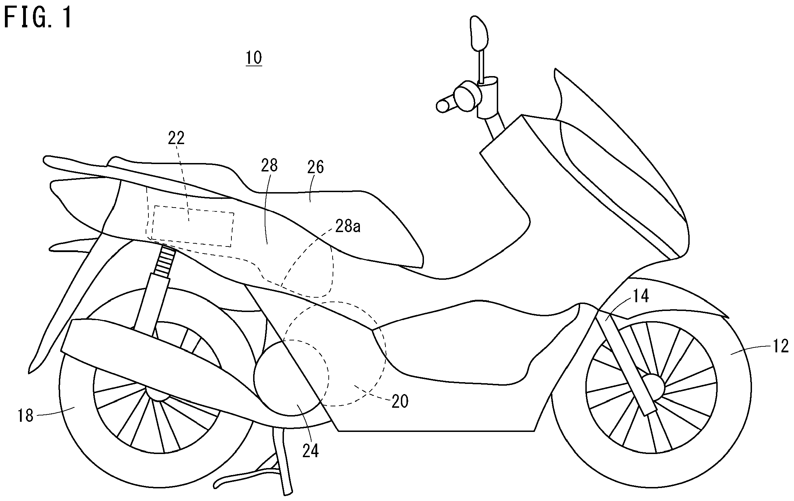

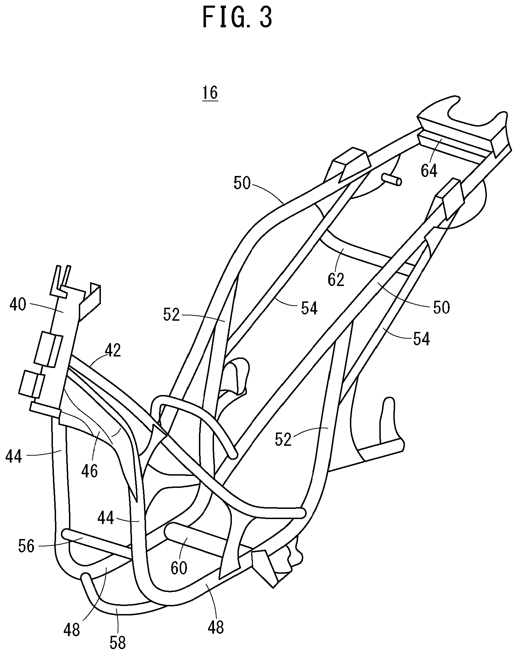

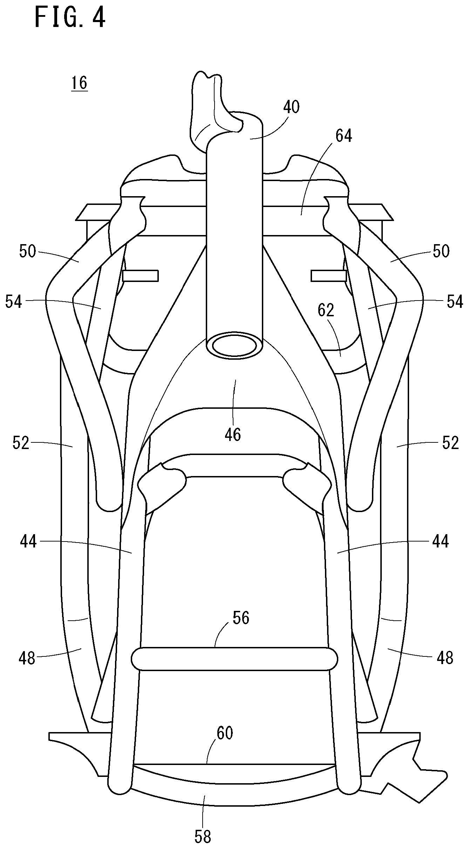

Hereinafter, an embodiment of a two-wheeled hybrid vehicle according to the present invention will be described with reference to FIGS. 1 to 13.

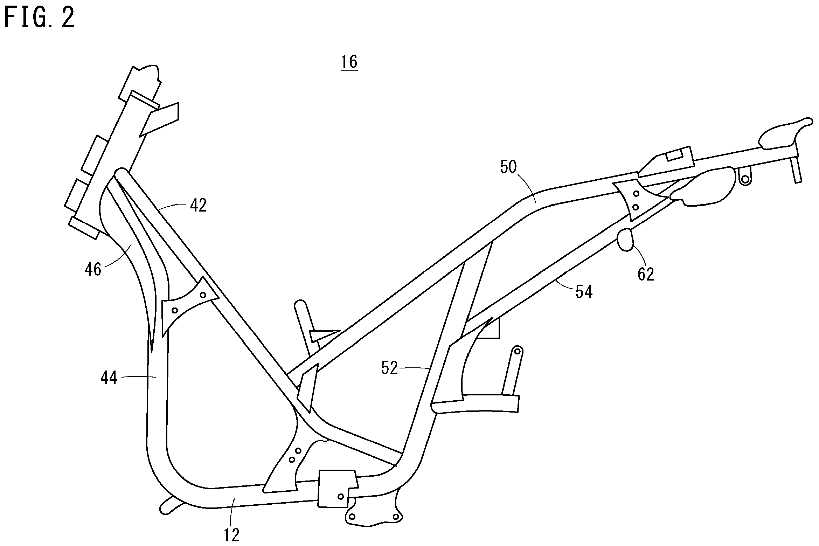

As shown in FIG. 1, the two-wheeled hybrid vehicle according to the present embodiment (hereinafter referred to as a vehicle 10) includes a front wheel 12, a front fork 14 supporting the front wheel 12, a vehicle body frame 16 supporting the front fork 14 in a steerable manner (refer to FIGS. 2 to 4), and a rear wheel 18 which is a drive wheel of the vehicle 10.

Further, the vehicle 10 includes an engine 20, a power storage device 22, a motor 24 that drives the rear wheel 18 with electrical power from the power storage device 22, a seat 26 on which the vehicle occupant rides, and an accommodating unit 28 formed below the seat 26.

As shown in FIGS. 2 to 4, the structure of the vehicle body frame 16 includes the following frames.
(a) A head pipe 40 that supports the front fork 14 (see FIG. 1) in a steerable manner.
(b) A pair of left and right main frames 42 that branch to the right and left from an upper rear portion of the head pipe 40, and extend in rearward and downward directions as viewed respectively from the side.
(c) A pair of left and right down frames 44 that branch to the right and left from a lower rear portion of the head pipe 40, and extend in rearward and downward directions at a steeper slope than the main frames 42 as viewed respectively from the side.
(d) A gusset 46 provided in between the left and right down frames 44 in the vicinity of the head pipe 40.
(e) A pair of left and right lower frames 48 that connect lower end portions of the left and right down frames 44 and rear end portions of the left and right main frames 42, respectively.
(f) A pair of left and right upper seat frames 50 that extend from middle portions of the left and right main frames 42 to the rear portion of the vehicle 10 corresponding to the seat 26.
(g) A pair of left and right support frames 52 that extend from rear end portions of the left and right lower frames 48 toward respective central portions of the left and right upper seat frames 50, and which support the left and right upper seat frames 50.
(h) Left and right lower seat frames 54 that extend from middle portions of the left and right support frames 52 to rear portions of the upper seat frames 50.
(i) A cross frame 56 connected between the left and right down frames 44.
(j) A cross frame 58 having a curved shape and which is connected between lower portions of the left and right down frames 44.
(k) A cross frame 60 connected between the left and right lower frames 48.
(l) A front cross frame 62 connected between the left and right lower seat frames 54.
(m) A rear cross frame 64 connected between rear portions of the left and right upper seat frames 50.

In the foregoing manner, taking into consideration the deflection of the vehicle body frame 16 as a whole, and in order to increase rigidity, the frame structure of the vehicle 10 includes at least the pair of rearwardly extending left and right main frames 42, and the pair of downwardly extending left and right down frames 44. Further, by providing the gusset 46 in the vicinity of the head pipe 40 of the left and right down frames 44, a space is formed for laying out the vehicle-mounted components.

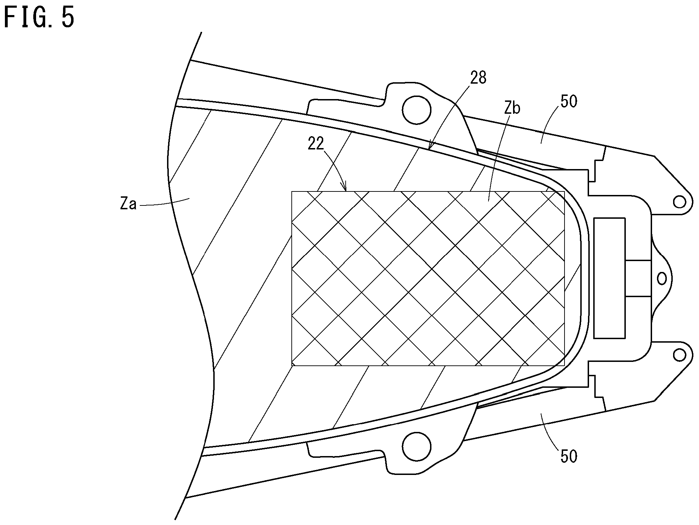

In addition, as shown in FIG. 1, the power storage device 22 of the vehicle 10 according to the present embodiment is disposed upwardly of the rear wheel 18, and more rearward than a deepest portion 28a of the accommodating unit 28. Furthermore, as shown in FIG. 5, the power storage device 22 is arranged in a manner so as to at least partially overlap with an upper open region Za of the accommodating unit 28 as viewed from above. The region in which the power storage device 22 is arranged is referred to as an "arrangement region Zb".

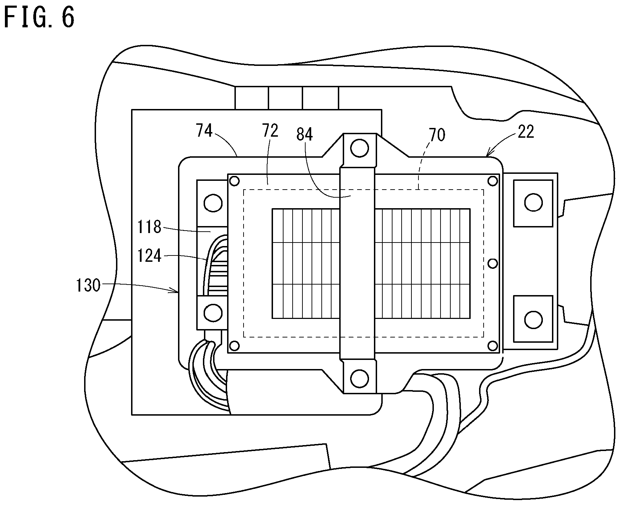

Further, as shown in FIG. 6, the power storage device 22 includes a power storage device main body 70 (shown by the dashed line) constituted by stacking a plurality of power storage cells, a case 72 that covers the power storage device main body 70, and a power storage device arrangement body 74 by which the case 72 is arranged in the arrangement region Zb in a state in which at least a portion of the case 72 is covered.

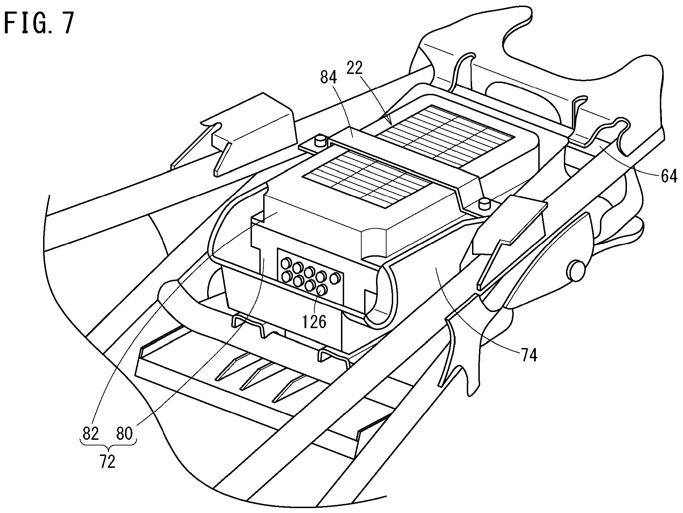

As shown in FIG. 7, the case 72 includes a box 80 having an upper surface opening and accommodating the power storage device main body 70 therein, and a lid 82 that closes the opening of the box 80. The lid 82 is fixed to the box 80, for example, using screws.

On the other hand, according to the present embodiment, the power storage device arrangement body 74 includes side walls arranged in four directions, and further includes a tray shape having an upper surface opening. The case 72 (in which the power storage device main body 70 is accommodated) is mounted on a bottom portion of the tray-shaped power storage device arrangement body 74. The case 72 accommodated in the power storage device arrangement body 74 is prevented from moving upward, for example, by a belt 84 which is stretched over the power storage device arrangement body 74. Accordingly, the case 72 is swingable together with the power storage device arrangement body 74 when the vehicle 10 vibrates.

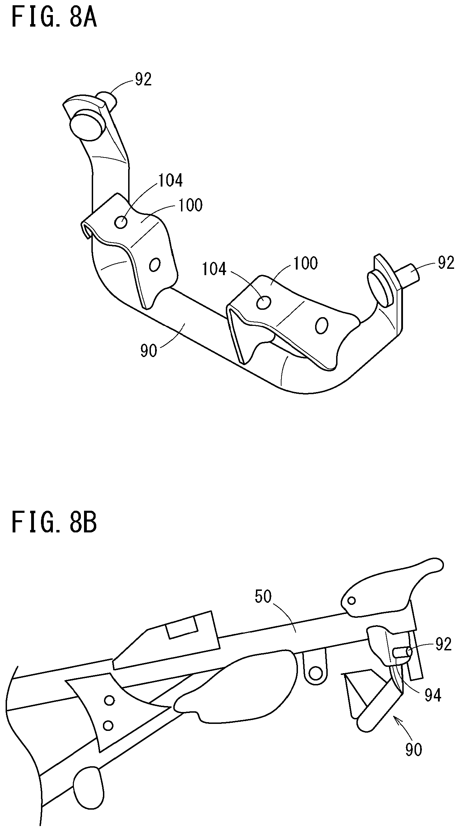

Next, a description will be given with reference to FIGS. 8A to 11 concerning a fixing structure for fixing the power storage device arrangement body 74 to the vehicle body.

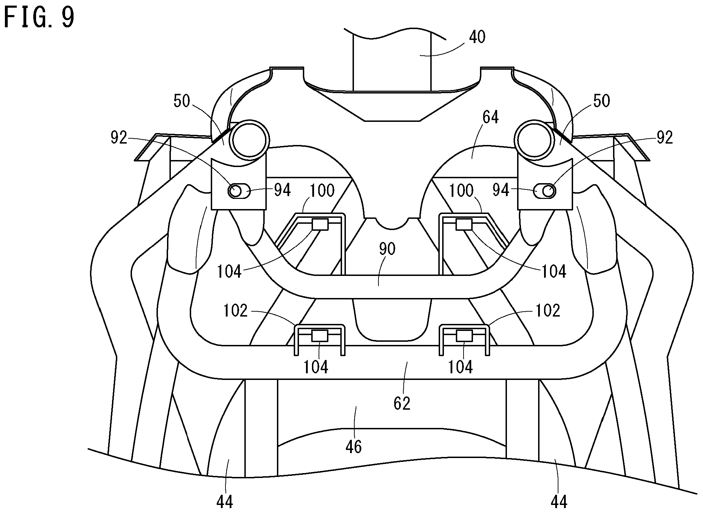

As shown in FIGS. 8A, 8B, 9, and 10, such a fixing structure includes a vehicle body mounting stay 90 (see FIGS. 8A and 9), which is connected between the rear portions of the left and right upper seat frames 50 (see FIG. 9), and is used for mounting the power storage device arrangement body 74 to the vehicle body, fixing tools 92 (for example, T-nuts or the like) provided at both end portions of the vehicle body mounting stay 90, and mounting holes 94 (see FIGS. 8B and 9) provided in the rear portions of the left and right upper seat frames 50, and through which the fixing tools 92 are inserted. The vehicle body mounting stay 90, for example, has a U-shape that is similar to the shape of the front cross frame 62.

Accordingly, as shown in FIGS. 8B and 9, the fixing tools 92 provided at both end portions of the vehicle body mounting stay 90 are inserted respectively into the corresponding mounting holes 94, whereby the vehicle body mounting stay 90 is attached in a bridging manner between the rear end portions of the left and right upper seat frames 50. In addition, from the rear side of the vehicle 10, for example, bolts are screwed (tightened) onto the fixing tools 92 that have been inserted through the mounting holes 94, thereby fixing the vehicle body mounting stay 90 between the rear end portions of the upper seat frames 50. Consequently, the vehicle body mounting stay 90 becomes disposed at the rear end portions of the upper seat frames 50 in parallel with the front cross frame 62. The rear end portions of the upper seat frames 50 are positioned higher than the front cross frame 62. Further, the upper seat frames 50 and the lower seat frames 54 are inclined upward toward the rearward direction, respectively. Since the power storage device 22 is fixed along the upper seat frames 50 and the lower seat frames 54, the power storage device 22 is also inclined upward toward the rearward direction.

As shown in FIGS. 8A and 9, two inverted U-shaped vehicle body mounting brackets (hereinafter referred to as rear brackets 100) are mounted, for example, by welding, on the upper portion of the vehicle body mounting stay 90, and as shown in FIG. 9, two inverted U-shaped vehicle body mounting brackets (hereinafter, referred to as front brackets 102) are mounted, for example, by welding, on the upper portion of the front cross frame 62. Screw holes 104 into which bolts are screwed are formed in the respective upper portions of the rear brackets 100 and the front brackets 102. Moreover, the height of the rear brackets 100 is set to be higher than the height of the front brackets 102.

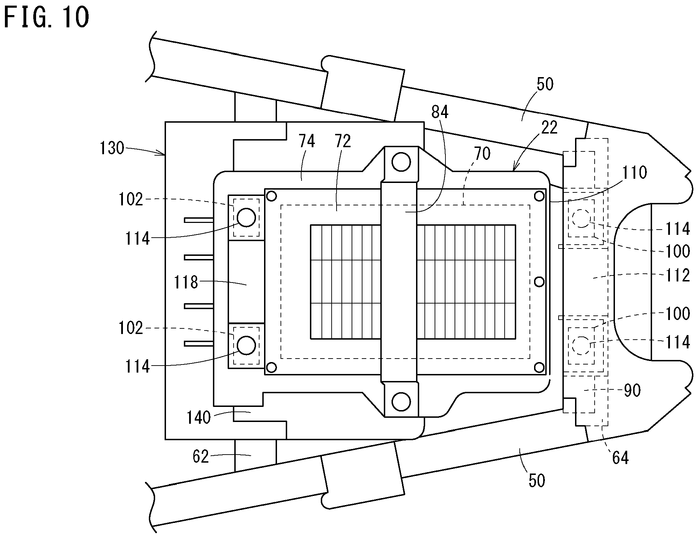

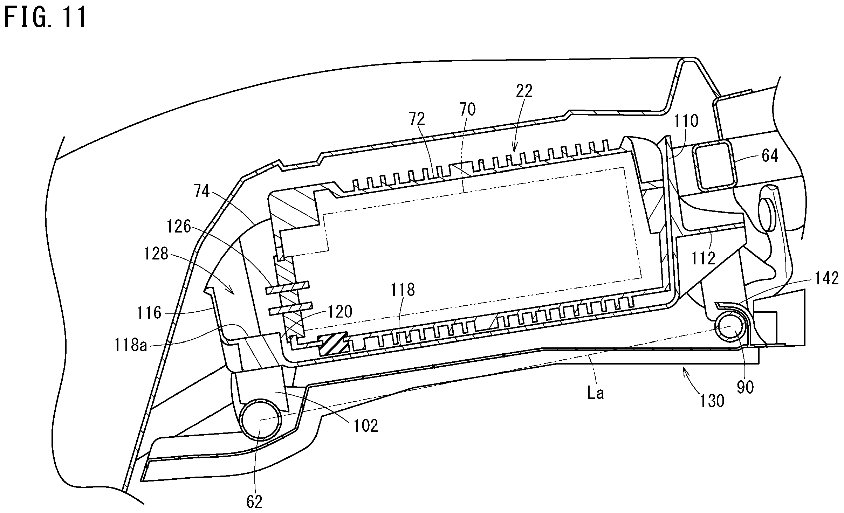

On the other hand, as shown in FIGS. 10 and 11, a fixing protrusion 112 that extends in a rearward direction is provided on a rear side wall 110 of the power storage device arrangement body 74. In the fixing protrusion 112, through holes (not shown) are provided through which bolts 114, which are screwed onto the rear brackets 100 (see FIG. 9), are inserted. Further, a step 120 is formed at a bottom portion 118 of the power storage device arrangement body 74 at a portion near to a front side wall 116, and through holes (not shown) through which the bolts 114 (see FIG. 10) for being fixed to the front brackets 102 are inserted are provided in an upper step portion 118a thereof.

Accordingly, as shown in FIG. 10, a connection site between the power storage device arrangement body 74 and the rear brackets 100 overlaps (including a case of partial overlapping, as will apply in the same manner hereinafter) with the rear cross frame 64 as viewed from above, and a connection site between the power storage device arrangement body 74 and the front brackets 102 overlaps with the front cross frame 62 as viewed from above.

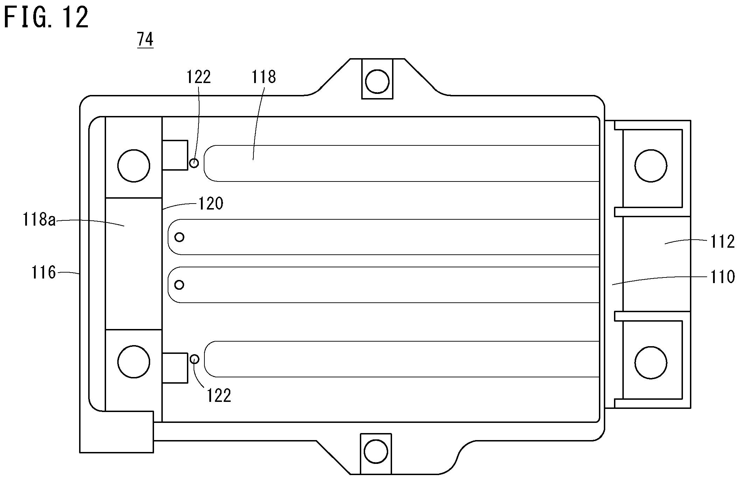

Further, as shown in FIG. 11, a line La connecting the front cross frame 62 and the vehicle body mounting stay 90 is inclined downward toward the front of the vehicle 10 as viewed from the side, and further, since the height of the rear brackets 100 is set to be higher than the height of the front brackets 102 (see FIG. 9), the bottom portion 118 of the power storage device arrangement body 74 is also inclined downward toward the front of the vehicle 10. From such a positional relationship, as shown in FIG. 12, within the bottom portion 118 of the power storage device arrangement body 74, a plurality (for example, four) drainage holes 122 (through holes) are formed at a location in the vicinity of the step 120, and more specifically, in the vicinity of a lowermost inclined portion of the power storage device arrangement body 74.

Moreover, as shown in FIG. 11, terminals 126 to which power cables 124 (see FIGS. 6 and 7) are connected are provided on the front side of the case 72 in the longitudinal direction of the vehicle 10. More specifically, within the case 72, the terminals 126 are provided at positions exposed to a space 128 above the upper step portion 118a. Therefore, depending on the type of vehicle, the case 72 may be accommodated in the power storage device arrangement body 74 in a state with the power cables 124 connected to the terminals 126, or the power cables 124 may be connected to the terminals 126 after the case 72 has been accommodated in the power storage device arrangement body 74. In either situation, the assembly operation can be preformed efficiently in accordance with the type of vehicle. In addition, since the connection site (terminals 126) is provided on the front side of the power storage device main body 70, the high-voltage wiring can be reliably protected.

When mounting of the power storage device arrangement body 74 is carried out, for example, the following assembly procedure is used. More specifically, at first, before attaching the vehicle body mounting stay 90 to the rear portions of the upper seat frames 50, the rear portion of the power storage device arrangement body 74 is fixed to the rear brackets 100 that are fixed to the vehicle body mounting stay 90. Thereafter, the front portion of the power storage device arrangement body 74 is fixed to the front brackets 102 that are fixed to the front cross frame 62. Next, the vehicle body mounting stay 90 is mounted on the rear portions of the upper seat frames 50. At this time, from the rear side of the vehicle 10, by the bolts being screwed (tightened) onto the fixing tools 92 that have been inserted through the mounting holes 94, the power storage device arrangement body 74 moves in a rearward direction together with the vehicle body mounting stay 90, and at a stage at which screwing of the bolts is completed, the vehicle body mounting stay 90 becomes fixed between the rear end portions of the upper seat frames 50, and the power storage device arrangement body 74 is positioned at a prescribed position.

In the example described above, although an example has been illustrated in which through holes through which the bolts 114 are inserted are provided in the aforementioned upper step portion 118a of the power storage device arrangement body 74, instead of such an example, the lower surface of the upper step portion 118a and the front brackets 102 may be welded, and the power storage device arrangement body 74 may be fixed without providing the through holes. In this case, since the front portion of the power storage device arrangement body 74 is firmly fixed to the front brackets 102, there is no need to consider that the bolts 114 may become loosened during the fixing operation, and the efficiency of the assembly operation can be improved.

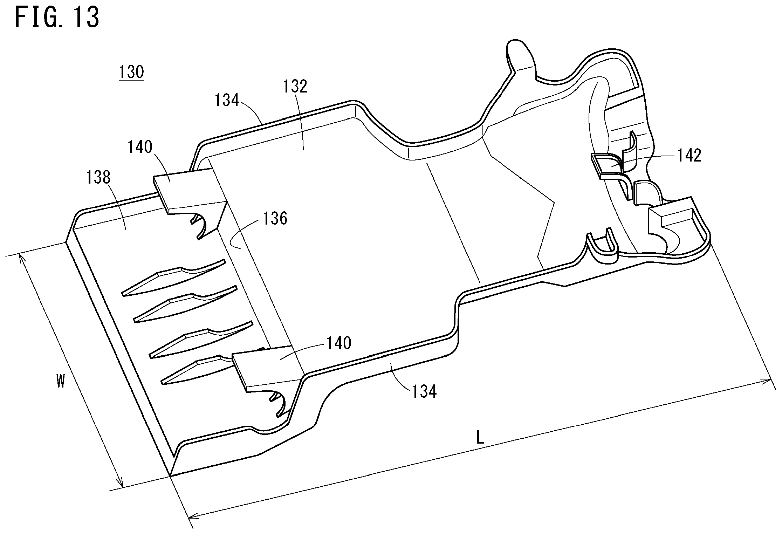

Further, as shown in FIGS. 10 and 11, the vehicle 10 according to the present embodiment includes a tray 130 that is positioned downwardly of the power storage device arrangement body 74, and which covers at least the front portion of the power storage device arrangement body 74. As shown in FIG. 13, the tray 130 has a bottom portion 132, and a peripheral wall 134 that is formed around the bottom portion 132. The bottom portion 132 is formed in a manner so that a length L thereof in the longitudinal direction is longer than a length in the longitudinal direction of the power storage device arrangement body 74, and a width W of a front portion thereof is larger than a maximum width of the power storage device arrangement body 74. Further, a step 136 is formed on the tray 130 at a front part of the bottom portion 132. A front bottom portion 138 extending from the step 136 to the front end of the tray 130 is positioned at a downward location so as to be separated from the power storage device arrangement body 74.

Furthermore, on the tray 130, front hooks 140 are integrally formed respectively on the left and right sides of the step 136, and a rear hook 142 is formed integrally in a central portion of a rear portion of the tray 130. The direction in which the front hooks 140 and the rear hook 142 are bent is the same. Further, the distance between the pair of front hooks 140 is set to be wider than the installation width of the front brackets 102.

In addition, in the case that the tray 130 is attached, as shown in FIG. 10, the front hooks 140 of the tray 130 are hooked onto the front cross frame 62, and as shown in FIG. 11, the rear hook 142 of the tray 130 is hooked onto the vehicle body mounting stay 90, whereby the tray 130 can be easily attached to the vehicle body.

In addition, the tray 130, which is positioned below the power storage device arrangement body 74, swings together with the power storage device arrangement body 74. As a result, entry of foreign matter from below into the power storage device arrangement body 74 can be prevented. In the same manner as the power storage device arrangement body 74, the tray 130 is inclined in a downward direction toward the front of the vehicle 10. Accordingly, water from the power storage device arrangement body 74 can fall downward to a position that does not have an adverse influence on the vehicle 10.

In this manner, the vehicle 10 according to the present embodiment is a vehicle 10 that includes the front wheel 12 , the rear wheel 18, the engine 20, the power storage device 22, the motor 24 that is driven by electrical power from the power storage device 22, the seat 26, and the accommodating unit 28 formed below the seat 26. In addition, the power storage device 22 is disposed upwardly of the rear wheel 18, and so as to at least partially overlap with the upper open region Za of the accommodating unit 28 as viewed from above.

In accordance with such features, the upper portion of the power storage device 22 can be covered by the upper portion of the accommodating unit 28, and it is possible to prevent the vehicle occupant from accessing the power storage device 22. More specifically, a configuration can be provided in which, while the high-voltage battery is reliably protected, user convenience such as the capacity of the accommodating unit 28 or the like is not impaired. Further, since the power storage device 22 is arranged below the opening of the accommodating unit 28, the shape of the seat 26 can be designed without any concern given to the presence or absence of the power storage device 22 (high-voltage battery). Owing to this feature, components can be used in common between a vehicle having a high-voltage battery and a vehicle that does not have a high-voltage battery, thereby improving productivity. Further, because the power storage device 22 is arranged at a high position, it is possible to prevent water from entering therein when the vehicle 10 is submerged.

In the present embodiment, the power storage device 22 includes the power storage device main body 70 that is constituted by stacking a plurality of power storage cells, the case 72 that covers the power storage device main body 70, and the power storage device arrangement body 74 by which the case 72 is arranged in the arrangement region Zb in a state in which at least a portion of the case 72 is covered. The power storage device arrangement body 74 is connected to the vehicle body mounting brackets (the rear brackets 100 and the front brackets 102), and is fixed to the vehicle body via the vehicle body mounting brackets (100 and 102).

More specifically, the power storage device arrangement body 74 arranges the case 72 in the region (the arrangement region Zb) where the power storage device 22 is disposed, in a state in which at least a portion of the case 72 is covered. As a result, objects can be prevented from hitting against the power storage device 22 from the exterior, and damage to the power storage device 22 can be prevented.

In the present embodiment, the upper seat frames 50, and the rear cross frame 64 that connects the rear portions of the upper seat frames 50 are further provided, and the connection site between the power storage device arrangement body 74 and the vehicle body mounting brackets 100, and a position of the rear cross frame 64 overlap as viewed from above.

More specifically, the rear cross frame 64 is positioned at the rear portions of the upper seat frames 50. By the connection site between the power storage device arrangement body 74 and the vehicle body mounting brackets 100 being made to overlap with the rear cross frame 64 as viewed from above, the power storage device 22 can be placed as near as possible to the rear side of the vehicle body. As a result, an effect is realized in that, for example, the capacity of the accommodating unit 28 that is installed under the seat 26 can be assured, and the convenience of the vehicle occupant is not impaired.

In the present embodiment, the sites for fixing the vehicle body mounting brackets 100 are constituted to be capable of being fastened from the rear side of the vehicle 10 through the mounting holes 94 that penetrate in the longitudinal direction of the vehicle 10.

In accordance with this feature, since the power storage device 22 is disposed upwardly of the rear wheel 18, and more rearward than the deepest portion 28a of the accommodating unit 28 so as to at least partially overlap with the upper open region Za of the accommodating unit 28 as viewed from above, the ease of assembly can be improved.

In the present embodiment, the power storage device arrangement body 74 including the power storage device main body 70 and the case 72 is fixed so as to be inclined in the longitudinal direction of the vehicle 10, and the drainage holes 122 are formed in the vicinity of the lowermost inclined portion of the power storage device arrangement body 74. In accordance with this feature, it is possible to prevent the power storage device main body 70 and the case 72 (battery unit) from becoming submerged.

In the present embodiment, the power cables 124 connected to the power storage device 22 are further included, wherein the power cables 124 are connected to a front side of the power storage device 22 in the vehicle longitudinal direction. In accordance with this feature, since the power cables 124 are disposed at a position where they are difficult to be accessed from the exterior, damage thereto can be prevented.

In the present embodiment, the power storage device 22 is disposed upwardly of the rear wheel 18, and more rearward than the deepest portion 28a of the accommodating unit 28, so as to at least partially overlap with the upper open region Za of the accommodating unit 28 as viewed from above. In accordance with this feature, because the high-voltage battery is arranged at a high position, it is possible to prevent water from entering therein when the vehicle 10 is submerged.

Further, the vehicle 10 according to the present embodiment is a two-wheeled hybrid vehicle (10) that includes the front wheel 12 , the rear wheel 18, the engine 20, the power storage device 22, the motor 24 that is driven by electrical power from the power storage device 22, the seat 26, and the accommodating unit 28 formed below the seat 26. In addition, there are further included the upper seat frames 50, the lower seat frames 54, the front cross frame 62 connected between the lower seat frames 54, the rear cross frame 64 connected between the upper seat frames 50, the vehicle body mounting stay 90 by which the power storage device 22 is mounted on the vehicle body, and the front brackets 102 by which the power storage device 22 is mounted on the front cross frame 62. The front portion of the power storage device 22 is fixed directly to the front cross frame 62 via the front brackets 102, and the rear portion thereof is mounted on the vehicle body by way of bolt fastening via the vehicle body mounting stay 90.

In accordance with this feature, since the rear portion of the power storage device 22 is fastened by bolts, the power storage device 22 can be configured in a swingable manner, the high-voltage wiring can be made to bend at the same time, and the high-voltage system can be reliably protected.

Although a description has been made with reference to preferred embodiments of the present invention, the technical scope of the present invention is not limited to the descriptive scope of the above-described embodiments. In the above-described embodiments, various modifications or improvements can be added thereto, as would be apparent to those skilled in the art. It is obvious from the statements of the claims that embodiments having such added modifications or improvements can be included within the technical scope of the present invention. Further, the parenthetical reference numerals referred to in the claims are provided in accordance with the reference numerals in the accompanying drawings in order to facilitate understanding of the present invention, but the present invention should not be construed as being limited to the elements denoted by such reference numerals.

## Claims

1. A two-wheeled hybrid vehicle (10) comprising a front wheel (12), a rear wheel (18), an engine (20), a power storage device (22), a motor (24) configured to be driven by electrical power from the power storage device (22), a seat (26), and an accommodating unit (28) formed below the seat (26);
wherein the power storage device (22) is disposed upwardly of the rear wheel (18) so as to at least partially overlap with an upper open region (Za) of the accommodating unit (28) as viewed from above,
the power storage device (22) comprising:
a power storage device main body (70) constituted by stacking a plurality of power storage cells;
a case (72) configured to cover the power storage device main body (70); and a power storage device arrangement body (74) configured to arrange the case (72) in a region (Zb) where the power storage device (22) is disposed, in a state in which at least a portion of the case (72) is covered;
wherein the power storage device arrangement body (74) is fixed to a vehicle body via a vehicle body mounting stay (90),
the two-wheeled hybrid vehicle (10) further comprising:
seat frames (50, 54); and
a cross frame (64) configured to connect rear portions of the seat frames (50, 54), wherein
a connection site between the power storage device arrangement body (74) and a vehicle body mounting bracket (100), and a position of the cross frame (64) overlap as viewed from above,
the power storage device (22) is disposed forwardly of the vehicle body mounting bracket (100),
the two-wheeled hybrid vehicle (10) further comprises a power cable (124) connected to the power storage device (22), wherein the power cable (124) is connected to a front side of the power storage device (22) in a vehicle longitudinal direction,
the case (72) includes a terminal (126) to which the power cable (124) is connected, wherein the terminal (126) is provided on a front side of the case (72) in the vehicle longitudinal direction, and
the motor (24) is provided further forward in the vehicle longitudinal direction than the terminal (126).

2. The two-wheeled hybrid vehicle (10) according to claim 1, wherein the vehicle body mounting stay (90) is capable of being fastened from a rear side of the vehicle through a mounting hole (94) that penetrates in a longitudinal direction of the vehicle (10).

3. The two-wheeled hybrid vehicle (10) according to claim 1 or 2, wherein:
the power storage device arrangement body (74) including the power storage device main body (70) and the case (72) is fixed so as to be inclined in a vehicle longitudinal direction; and
a drainage hole (122) is formed in the vicinity of a lowermost inclined portion of the power storage device arrangement body (74).

4. The two-wheeled hybrid vehicle (10) according to any one of claims 1 to 3, wherein the power storage device (22) is disposed upwardly of the rear wheel (18), and more rearward than a deepest portion (28a) of the accommodating unit (28) so as to at least partially overlap with the upper open region (Za) of the accommodating unit (28) as viewed from above.

5. The two-wheeled hybrid vehicle (10) according to claim 1, wherein the seat frames (50, 54) comprise upper seat frames (50) and lower seat frames (54), the two-wheeled hybrid vehicle further comprising a front cross frame (62) connected between the lower seat frames (54), a rear cross frame (64) connected between the upper seat frames (50); and
a vehicle body mounting bracket (102) configured to mount the power storage device (22) on the front cross frame (62);
wherein a front portion of the power storage device (22) is fixed directly to the front cross frame (62) via the vehicle body mounting bracket (102), and a rear portion thereof is mounted on the vehicle body by way of bolt fastening via the vehicle body mounting stay (90).

## Patentansprüche

1. Zweirädriges Hybridfahrzeug (10), umfassend ein Vorderrad (12), ein Hinterrad (18), einen Verbrennungsmotor (20), eine Energiespeichervorrichtung (22), einen Motor (24), welcher dazu eingerichtet ist, durch elektrische Energie von der Energiespeichervorrichtung (22) angetrieben zu werden, einen Sitz (26) und eine Aufnahmeeinheit (28), welche unterhalb des Sitzes (26) gebildet ist;
wobei die Energiespeichervorrichtung (22) oberhalb des Hinterrads (18) angeordnet ist, um mit einem oberen offenen Bereich (Za) der Aufnahmeeinheit (28) wenigstens teilweise zu überlappen, wenn von oben betrachtet,
wobei die Energiespeichervorrichtung (22) umfasst:
einen Energiespeichervorrichtung-Hauptkörper (70), welcher durch Stapeln einer Mehrzahl von Energiespeicherzellen ausgebildet ist;
ein Gehäuse (72), welches dazu eingerichtet ist, den Energiespeichervorrichtung-Hauptkörper (70) abzudecken; und
einen Energiespeichervorrichtung-Anordnungskörper (74), welcher dazu eingerichtet ist, das Gehäuse (72) in einem Bereich (Zb), in welchem die Energiespeichervorrichtung (22) angeordnet ist, in einem Zustand anzuordnen, in welchem wenigstens ein Abschnitt des Gehäuses (72) abgedeckt ist;
wobei der Energiespeichervorrichtung-Anordnungskörper (74) über eine Fahrzeugkörper-Montagestütze (90) an einem Fahrzeugkörper fixiert ist,
wobei das zweirädrige Hybridfahrzeug (10) ferner umfasst:
Sitzrahmen (50, 54); und
einen Querrahmen (64), welcher dazu eingerichtet ist, hintere Abschnitte der Sitzrahmen (50, 54) zu verbinden, wobei
eine Verbindungsstelle zwischen dem Energiespeichervorrichtung-Anordnungskörper (74) und einer Fahrzeugkörper-Montagehalterung (100) und eine Position des Querrahmens (64) überlappen, wenn von oben betrachtet,
wobei die Energiespeichervorrichtung (22) vor der Fahrzeugkörper-Montagehalterung (100) angeordnet ist,
wobei das zweirädrige Hybridfahrzeug (10) ferner ein Stromkabel (124) umfasst, welches mit der Energiespeichervorrichtung (22) verbunden ist, wobei das Stromkabel (124) mit einer Vorderseite der Energiespeichervorrichtung (22) in einer Fahrzeug-Longitudinalrichtung verbunden ist,
wobei das Gehäuse (72) einen Anschluss (126) umfasst, mit welchem das Stromkabel (124) verbunden ist, wobei der Anschluss (126) an einer Vorderseite des Gehäuses (72) in der Fahrzeug-Longitudinalrichtung bereitgestellt ist, und
der Motor (24) in der Fahrzeug-Longitudinalrichtung weiter vorne bereitgestellt ist als der Anschluss (126).

2. Zweirädriges Hybridfahrzeug (10) nach Anspruch 1, wobei die Fahrzeugkörper-Montagestütze (90) dazu geeignet ist, von einer Rückseite des Fahrzeugs durch ein Montageloch (94) befestigt zu werden, welches in einer longitudinalen Richtung des Fahrzeugs (10) durchdringt.

3. Zweirädriges Hybridfahrzeug (10) nach Anspruch 1 oder 2, wobei:
der Energiespeichervorrichtung-Anordnungskörper (74), einschließlich des Energiespeichervorrichtung-Hauptkörpers (70) und des Gehäuses (72), derart fixiert ist, dass er in einer Fahrzeug-Longitudinalrichtung geneigt ist; und
ein Drainage-Loch (122) in der Nähe eines untersten geneigten Abschnitts des Energiespeichervorrichtung-Anordnungskörpers (74) gebildet ist.

4. Zweirädriges Hybridfahrzeug (10) nach einem der Ansprüche 1 bis 3, wobei die Energiespeichervorrichtung (22) oberhalb des Hinterrads (18) und weiter hinten als ein tiefster Abschnitt (28a) der Aufnahmeeinheit (28) angeordnet ist, um wenigstens teilweise mit dem oberen offenen Bereich (Za) der Aufnahmeeinheit (28) zu überlappen, wenn von oben betrachtet.

5. Zweirädriges Hybridfahrzeug (10) nach Anspruch 1, wobei die Sitzrahmen (50, 54) obere Sitzrahmen (50) und untere Sitzrahmen (54) umfassen, wobei das zweirädrige Hybridfahrzeug ferner einen vorderen Querrahmen (62), welcher zwischen den unteren Sitzrahmen (54) verbunden ist, einen hinteren Querrahmen (64), welcher zwischen den oberen Sitzrahmen (50) verbunden ist; und eine Fahrzeugkörper-Montagehalterung (102) umfasst, welche dazu eingerichtet ist, die Energiespeichervorrichtung (22) an dem vorderen Querrahmen (62) zu montieren;
wobei ein vorderer Abschnitt der Energiespeichervorrichtung (22) über die Fahrzeugkörper-Montagehalterung (102) direkt an dem vorderen Querrahmen (62) fixiert ist und ein hinterer Abschnitt davon an dem Fahrzeugkörper über die Fahrzeugkörper-Montagestütze (90) mittels einer Bolzenbefestigung montiert ist.

## Revendications

1. Véhicule hybride à deux roues (10) comprenant une roue avant (12), une roue arrière (18), un moteur (20), un dispositif de stockage de puissance (22), un moteur électrique (24) configuré pour être entraîné par de l'énergie électrique provenant du dispositif de stockage de puissance (22), un siège (26) et une unité de logement (28) formée en dessous du siège (26) ;
dans lequel le dispositif de stockage de puissance (22) est disposé vers le haut de la roue arrière (18) de manière à se chevaucher au moins partiellement avec une région ouverte supérieure (Za) de l'unité de logement (28) en vue de dessus,
le dispositif de stockage de puissance (22) comprenant :
un corps principal de dispositif de stockage de puissance (70) constitué par empilement d'une pluralité de cellules de stockage de puissance ;
un boîtier (72) configuré pour couvrir le corps principal de dispositif de stockage de puissance (70) ; et
un corps d'agencement de dispositif de stockage de puissance (74) configuré pour agencer le boîtier (72) dans une région (Zb) où le dispositif de stockage de puissance (22) est disposé, dans un état dans lequel au moins une partie du boîtier (72) est couverte ;
dans lequel le corps d'agencement de dispositif de stockage de puissance (74) est fixé à une carrosserie de véhicule au moyen d'un étai de montage de carrosserie de véhicule (90),
le véhicule hybride à deux roues (10) comprenant en outre :
des châssis de siège (50, 54) ; et
un châssis transversal (64) configuré pour connecter des parties arrière des châssis de siège (50, 54), dans lequel
un site de connexion entre le corps d'agencement de dispositif de stockage de puissance (74) et un support de montage de corps de véhicule (100), et une position du châssis transversal (64) se chevauche en vue de dessus,
le dispositif de stockage de puissance (22) est disposé à l'avant du support de montage de carrosserie de véhicule (100),
le véhicule hybride à deux roues (10) comprend en outre un câble de puissance (124) connecté au dispositif de stockage de puissance (22), dans lequel le câble de puissance (124) est connecté à un côté avant du dispositif de stockage de puissance (22) dans une direction longitudinale de véhicule,
le boîtier (72) comporte une borne (126) à laquelle le câble de puissance (124) est connecté, dans lequel la borne (126) est prévue sur un côté avant du boîtier (72) dans la direction longitudinale de véhicule, et
le moteur électrique (24) est prévu plus vers l'avant dans la direction longitudinale de véhicule que la borne (126).

2. Véhicule hybride à deux roues (10) selon la revendication 1, dans lequel l'étai de montage de carrosserie de véhicule (90) est capable d'être attaché à partir d'un côté arrière du véhicule à travers un trou de montage (94) qui pénètre dans une direction longitudinale de véhicule (10).

3. Véhicule hybride à deux roues (10) selon la revendication 1 ou 2, dans lequel :
le corps d'agencement de dispositif de stockage de puissance (74) comportant le corps principal de dispositif de stockage de puissance (70) et le boîtier (72) est fixé de manière à être incliné dans une direction longitudinale de véhicule ; et
un trou d'évacuation (122) est formé au voisinage de la partie inclinée la plus basse du corps d'agencement de dispositif de stockage de puissance (74).

4. Véhicule hybride à deux roues (10) selon l'une quelconque des revendications 1 à 3, dans lequel le dispositif de stockage de puissance (22) est disposé vers le haut de la roue arrière (18), et plus en arrière que la partie la plus profonde (28a) de l'unité de logement (28) de manière à se chevaucher au moins partiellement avec la région ouverte supérieure (Za) de l'unité de logement (28) en vue de dessus.

5. Véhicule hybride à deux roues (10) selon la revendication 1, dans lequel les châssis de siège (50, 54) comprennent des châssis de siège supérieurs (50) et des châssis de siège inférieurs (54), le véhicule hybride à deux roues comprenant en outre un châssis transversal avant (62) connecté entre les châssis de siège inférieurs (54), un châssis transversal arrière (64) connecté entre les châssis de siège supérieurs (50) ; et
un support de montage de carrosserie de véhicule (102) configuré pour monter le dispositif de stockage de puissance (22) sur le châssis transversal avant (62) ;
dans lequel une partie avant du dispositif de stockage de puissance (22) est fixée directement au châssis transversal avant (62) au moyen du support de montage de carrosserie de véhicule (102), et une partie arrière de celui-ci est montée sur la carrosserie de véhicule à l'aide d'une fixation par boulon au moyen de l'étai de montage de carrosserie de véhicule (90).
